# EUROPEAN PATENT APPLICATION

(11) **EP 1 724 574 A1**
(43) Date of publication of application: **22.11.2006**
(21) Application number: 05719442.5
(22) Date of filing: 23.02.2005
(51) Int. Cl.: G01N 27/62, G01N 21/27, G01N 21/33, G01N 21/35, G01N 21/64, G01N 21/65, H01J 49/10

(54) **ANALYTICAL METHOD AND ANALYZER CAPABLE OF SUBSTANTIALLY SIMULTANEOUSLY ANALYZING ABSORPTION/EMISSION/SCATTERING SPECTRUM AND MASS SPECTRUM, AND ANALYTICAL METHOD AND MASS SPECTROSCOPE UTILIZING ELECTROSPRAY IONIZATION TECHNIQUE**

(30) Priority: 27.02.2004 JP 2004054148
(71) Applicant: Japan Science and Technology Agency, Kawaguchi-shi, Saitama 332-0012 (JP)
(72) Inventor: OGO, Seiji, Fukuoka 819-1136 (JP); FUKUZUMI, Shunichi, Osaka 561-0844 (JP); WATANABE, Yoshihito, Nishikamo-gun, Aichi 470-0208 (JP)
(74) Representative: Müller, Frithjof E.
(86) International application number: PCT/JP2005/002934
(87) International publication number: WO 2005/083416

(57) **Abstract**

An ionization chamber of an analytical apparatus (10) in which high concentration test sample ions are evaporated is provided with an ion introduction control means (8) to control the quantity of the test sample ions introduced to an ion attracting electrode (9). Therefore, an analytical apparatus can be provided that is capable of substantially simultaneous mass spectrometry and absorption, emission, and scattering spectroscopy. The apparatus also includes: a low temperature bath (106) which cools the test sample solution before it is introduced to the sprayer (104); and a cooling gas introduction tube (108), constructed separately from the sprayer, which cools the sprayer and the test sample solution introduced to the sprayer (104). The inclusion enables effective restriction of test sample heating upon high voltage application. Mass spectrometry and absorption, emission, and scattering spectroscopy can be substantially simultaneously carried out even when the test sample used is stable only at extremely low temperatures.

## Description

### TECHNICAL FIELD

The present invention relates to an apparatus and method for absorption, emission, and scattering spectroscopy with substantially simultaneous mass spectrometry and also to an apparatus and method for mass spectrometry based on electrospray ionization.

### BACKGROUND ART

In the medical and related fields, the structural analysis of molecules is becoming increasingly important as part of studies to identify biopolymers, such as proteins and nucleic acids, and medical substances. A particularly well-known method of analysis of molecular structures is mass spectrometry. Mass spectrometry is used also in the analysis of organic metal complexes which is growing in popularity in recent years.

Ionization in the context of mass spectrometry has been extensively studied and developed. Among these ionization methods, an optimal one is employed in view of a sample's properties. One of the method, called electrospray ionization, takes advantage of electro spraying. The method is very "soft" because it involves no intensive heating or high energy particle collisions in the ionization of sample molecules. Mass spectrometry based on electrospray ionization can identify biopolymers, such as proteins and nucleic acids, and medical substances and analyze the molecular structures of organic metal complexes, by readily ionizing samples of these materials virtually without destroying them. The mass spectrometry provides an essential analytical tool in the studies related to the materials.

Apart from the mass spectrometry, various types of absorption, emission, and scattering spectroscopy in the infrared, visible, and ultraviolet ranges are also known to offer essential analytical tools to obtain structural information on not only proteins and other biopolymers in solutions and organic metal complexes, but also various chemical substances. The spectroscopic methods, including the mass spectrometry, deliver more reliable results in the determination of a compound structure if two or more different techniques are utilized for comprehensive evaluation.

LC-MS/NMR (developed by JEOL Ltd.) is an example of this approach, capable of simultaneously implementing two analytical techniques. With NMR analysis, however, it is difficult to determine the structure of a chemical species with very short lifetime like an intermediate produced in a chemical reaction.

In contrast, absorption, emission, and scattering spectroscopy, as well as mass spectrometry, are capable of quick measurement and suited for the determination of the structure of a chemical species with very short lifetime. If a combination of these spectrum analysis methods can be used for substantially simultaneous, real-time measurement of a test sample, it becomes feasible to accurately analyze the structure of an unstable reaction intermediate and like materials.

As mentioned above, absorption, emission, and scattering spectroscopy, as well as mass spectrometry, are known to be capable of quick measurement. Furthermore, the analytical techniques give important information in, for example, direct observation of reactions in living organisms, investigation into the functions of living organisms based on metal complex modeling, and analysis of intermediates in chemical reactions. Accordingly, the inventors suggested, in the non-patent document "New Central Dogmas in Biochemistry" by SUGIMOTO Naomi (editor), Kagaku-Dojin Publishing Company Inc., 2002, the technical concept of substantially simultaneous, real-time measurement of a single test sample by mass spectrometry and absorption, emission, and scattering spectroscopy.

However, the document disclosed nothing about a means that could realize substantially simultaneous measurement by mass spectrometry and absorption, emission, and scattering spectroscopy. It was therefore impossible at that time to substantially simultaneously sample a single reaction solution to obtain a mass spectrum and an absorption, emission, or scattering spectrum for analysis.

A reason is that the optimal concentration of the test sample differs between mass spectrometry and absorption, emission, and scattering spectroscopy (infrared absorption spectroscopy, visible to ultraviolet absorption spectroscopy, emission spectroscopy, and Raman scattering spectroscopy). A specific description follows.

The typical optimal concentration of a test sample for mass spectrometry, more specifically, the electrospray mass spectrometry mentioned earlier, is 10 µmol/L or less. Meanwhile, for the measurement of an infrared absorption spectrum, the optimal concentration is 1 mmol/L or more. It is 100 µmol/L to 10 mmol/L for the measurement of a visible to ultraviolet absorption spectrum and an emission spectrum and 10 µmol/L to 1 mmol/L for the measurement of a Raman scattering spectrum. So, the difference in the optimal concentration between the electrospray mass spectrometry and the other spectroscopy could be 1000 fold or even greater. Therefore, the substantially simultaneous measurement of a mass spectrum and an absorption, emission, or scattering spectrum on a single test sample solution was impossible.

For example, if one is to measure a mass spectrum on a test sample solution of a relatively high concentration (regulated for the measurement of an absorption, emission, or scattering spectrum), the test sample is ionized and evaporated in abundance. The large quantities of ions flow into the mass spectrometer section, which may cause large electric current and damage to device circuitry. If one is to dilute a test sample solution of a relatively high concentration for the measurement of a mass spectrum, the sample needs be diluted about 1000 fold. In view of system condition and time, simultaneous measurement is very difficult in practice. Diluting is not a preferred method.

The electrospray ionization also has a problem: the molecular structure of sample ions is destroyed in ionization. The problem occurs, for example, in a self-assembled, thus highly ordered, supramolecular compound of a complex of platinum or another transition metal. These metal complexes are unstable in electrospray ionization too. The molecular structure is destroyed by the heat generated in ion evaporation.

To address the problem, an electrospray ionization method was developed which involves a means that restricts heat generation by sample ions in their evaporation. The method is called cold spray ionization. Japanese Unexamined Patent Publication (Tokukai) 2000-285847 (published on October 13, 2000) discloses an electrospray ionization mass spectrometer which implements cold spray ionization. In the ion evaporation of a test sample in a solvent, that is, the spraying of the test sample and solvent from a capillary, the device uses a cooled inactive gas for evaporation and liquid nitrogen in a desolvation chamber or ion source block. The device thereby restricts heat generation by droplets in the ion evaporation. With this device, one can now restrict heat generation by sample ions in their evaporation.

Japanese Unexamined Patent Publication (Tokukai) 2003-157793 (published on May 30, 2003) discloses a device controlling the temperature of a nebulizing gas to set the gas to a given temperature. This device restricts heat generation in ion evaporation more efficiently than the electrospray ionization mass spectrometer disclosed in Tokukai 2000-285847.

However, both the electrospray ionization mass spectrometers disclosed in the patents provides a means of limiting/lowering heat generation by focusing on the restriction of heat generation by droplets in ion evaporation. In other words, the spectrometers include cooling means for the purpose of preventing the molecular structure of sample ions from being destroyed by heat generation which, in their evaporation, is caused by high voltage application. Therefore, the spectrometers are difficult to use in mass spectrometry of a sample which is stable only at extremely low temperatures, e.g., -45°C or below.

Tokukai 2000-285847 and 2003-157793 both disclose an electrospray ionization mass spectrometer which uses cooling means to cool down the nebulizing gas and restricts heat generation by the test sample which, in ion evaporation, is caused by high voltage application. The cooled nebulizing gas prevents the molecular structure of the sample ions from being destroyed by heat generation. However, the spectrometers have two common problems as follows.

First, the cooling in the nebulizing gas or desolvation chamber is nothing but indirect cooling of the charged test sample (charged droplets) after high voltage application. The test sample heats up already when high voltage is applied. The heated test sample has its molecular structure having been destroyed. This is especially true in the analysis of a sample which is very unstable to heat. Cooling down this sample does not help. Analysis is impossible.

The electrospray ionization mass spectrometers disclosed in the documents are not provided with any means which cools the test sample before the high voltage application. The temperature of the test sample before the high voltage application affects the restriction of heat generation in the high voltage application, which is especially true with test samples which are stable only at extremely low temperatures. The temperature of the test sample before the high voltage application needs to be at least in the range where the test sample is stable, preferably, lower than that range. The spectrometer's configuration is insufficient to carry out mass spectrometry on a test sample which is stable only at extremely low temperatures.

Tokukai 2003-157793 discloses a prepared error correction table for precise temperature control. The temperature to which the temperature regulator is set up differs from the actual temperature of the cooled test sample. The temperature of the test sample could be higher than the temperature setting. The feature, again, is not able to completely prevent the thermal destruction of test sample ions.

Secondly, these electrospray ionization mass spectrometers are provided with a sprayer which in turn includes: a capillary from which the test sample solution is ejected; and a sheath tube, having the same axis with the capillary, through which a nebulizing gas flows.

More specifically, the circumference of the sheath tube is connected to the sprayer to which high voltage is applied. In this structure, if a cooled nebulizing gas is conducted through the sheath tube, the temperature difference between the sheath tube and its outside environment will likely cause dew to form on the outside of the sheath tube. The phenomenon is evident with those samples which are suitable test samples for the electrospray ionization mass analyzer of the present invention and which are stable only at extremely low temperatures (e.g., about -45°C or below) and become unstable when heated.

The temperature of the nebulizing gas, or cooling means, for test samples which are stable only at extremely low temperatures is equal to or below the extremely low temperatures, in order to restrict the heat generation in ion evaporation to a minimum. In this manner, in an electrospray ionization mass spectrometer structured as above, if dew forms on the outside of the sheath tube and flows into the high voltage applying section of the sprayer for some reason, electricity may dangerously leak or give a shock upon the high voltage application.

The present invention, conceived to address these problems, has an objective to provide an analytical apparatus which substantially simultaneously carries out mass spectrum analysis and absorption, emission, and scattering spectrum analysis and which carries out mass spectrometry on a sample that is stable only at extremely low temperatures and becomes unstable when heated, without letting the sample decompose due to heat and also to provide an electrospray ionization mass analyzer which carries out mass spectrometry on a sample that is stable only at extremely low temperatures and becomes unstable when heated, without letting the sample decompose due to heat.

### DISCLOSURE OF INVENTION

First, the inventors have diligently worked and conducted researches in order to solve the problems. As a result, the inventors have found that ion evaporation, hence mass spectrum measurement, is possible with test samples of relatively high concentration that are used in the measurement of an absorption, emission, and scattering spectrum, which has led to the completion of the invention.

An analytical apparatus in accordance with the present invention is characterized in that it comprises: an absorption/emission/scattering spectrum analyzer analyzing at least one of an absorption spectrum, an emission spectrum, and a scattering spectrum; and a mass spectrum analyzer analyzing a mass spectrum, wherein: the absorption/emission/scattering spectrum analyzer and the mass spectrum analyzer carry out analysis on a single test sample; and the mass spectrum analyzer includes ion introduction control means controlling a quantity of evaporated test sample ions.

When one is to analyze multiple spectra of an unstable test sample, such as a reaction intermediate, the analysis needs to be done quickly. It is known that it takes only a short period of time to measure any of the absorption, emission, and scattering spectra, as well as the mass spectrum. These analytical techniques are also known to give important information in, for example, direct observation of reactions in living organisms, investigation into the functions of living organisms based on metal complex modeling, and analysis of intermediates in chemical reactions. If different test sample solutions are used to obtain multiple spectra, however, the individual solutions will likely go through different reaction stages (although the difference may be small), producing inconsistent results. An apparatus capable of analyzing multiple spectra from one test sample has been sought after.

So far, there has been no such an apparatus, or mass spectrometer capable of simultaneous absorption, emission, or scattering spectroscopy, due to different optimal concentrations.

Meanwhile, the apparatus is capable of carrying out normal mass spectrometry even with a test sample with a higher-than-optimal concentration. The ion introduction control means controls the quantity of test sample ions evaporated up to higher-than-optimal concentration before introducing them to the mass spectrometer section, which enables normal mass spectrometry. As mentioned earlier, the optimal concentrations of a test sample for absorption, emission, and scattering spectroscopy are higher than that for mass spectrometry. Therefore, the apparatus of the present invention addresses the problem of different optimal concentrations and is capable of substantially simultaneous mass spectrometry and absorption, emission, and scattering spectroscopy. The capability of substantially simultaneous mass spectrometry and absorption, emission, and scattering spectroscopy on a single test sample enables analysis based on multiple spectra and yields highly reliable information in, for example, direct observation of reactions in living organisms, investigation into the functions of living organisms based on metal complex modeling, and analysis intermediates in chemical reactions.

The apparatus in accordance with the present invention is preferably such that the ion introduction control means is provided inside an ionization chamber of the mass spectrum analyzer.

Accordingly, in the present invention, the apparatus is capable of carrying out normal mass spectrometry even with a test sample with a higher-than-optimal concentration.

Even if the test sample has a higher-than-optimal concentration for mass spectrometry, the ion introduction control means controls the large quantity of evaporated test sample ions. An optimal quantity of ions is introduced to the mass spectrometer section. Therefore, accurate mass spectrometry is done without damaging the mass spectrometer section.

The apparatus in accordance with the present invention is preferably such that the ion introduction control means is adjusted in position using a position adjustment knob.

The quantity of test sample ions to be evaporated and the mobility of test sample ions to be ejected from a capillary tip toward an ion attracting electrode (orifice) vary depending on the solvent in which the test sample is dissolved. The quantity of test sample ions introduced to the mass spectrum analyzer varies with these conditions. That is, the quantity of test sample ions is controlled by different quantities depending on the conditions.

The position adjustment knob, which enables adjustment of the position of the ion introduction control means, allows an optimal quantity of test sample ions to be introduced to the mass spectrum analyzer.

The apparatus in accordance with the present invention is preferably such that the ion introduction control means is made of an electrically non-conductive material.

Accordingly, the quantity of test sample ions introduced to the mass spectrometer section is controllable without disrupting high voltage application to the test sample, in other words, the evaporation of the test sample ions.

The apparatus in accordance with the present invention is preferably such that the ion introduction control means has a mesh structure.

The mesh structure enables the control of the quantity of test sample ions without adversely affecting the test sample ions themselves after they are ejected from a capillary tip. For example, if an additional electrode was provided to control the quantity of test sample ions introduced to the ion attracting electrode, the apparatus would lose overall balance and more importantly, become expensive. All the test sample ions could be affected. Accurate mass spectrometry would be impossible.

The mesh structure controls the quantity of test sample ions by filtering the test sample ions with the mesh. The structure does not at all affect those test sample ions which should be introduced to the mass spectrometer section, allowing them to reach the mass spectrometer section. Accurate mass spectrometry is thus possible.

The provision of the ion introduction control means with a mesh structure does not change the structure of the conventional electrospray ionization mass spectrometer. The means is adapted so that, it simply attaches to the conventional electrospray ionization mass spectrometer. The means enables the apparatus to readily operate on high concentration test samples without significantly reducing the productivity of the conventional electrospray ionization mass spectrometer.

The apparatus in accordance with the present invention is preferably such that the mesh structure of the ion introduction control means has through holes ranging in diameter from 1 µm to 5 mm.

The structure can deal with a variety of high concentration test samples. Test samples, when ionized and evaporated, show different properties depending on the types of the test samples. One such property is wettability. Wettability in the present invention indicates the affinity of the ionized and evaporated test sample with the ion introduction control means. The size of the through holes of the mesh structure should match the nature of the test sample. The through hole size settings in the range above can match various types of high concentration test samples. No matter what the high concentration test sample, a particular quantity of ions is always introduced to the mass spectrometer section.

Various types of high concentration test samples can be handled simply by changing the through hole size. Accurate mass spectrometry is possible.

The absorption/emission/scattering spectrum analyzer analyzes at least one of an infrared absorption spectrum, a visible to ultraviolet absorption spectrum, a fluorescence spectrum, and a Raman scattering spectrum.

The apparatus in accordance with the present invention is preferably such that the temperature of the test sample is controlled.

With the temperature control, the test sample is more accurately measured. For example, to measure a reaction intermediate of a test sample of which the reaction rate slows down depending on the temperature, the measurement is preferably made while controlling the temperature. Therefore, with this feature, more accurate information on the test sample is obtainable.

Furthermore, the inventors have diligently worked and conducted researches in order to solve the problems. As a result, the inventors have found that heat generation in ion evaporation is effectively restricted by cooling the test sample before it is introduced to the sprayer.

Accordingly, the apparatus in accordance with the present invention is preferably such that: the mass spectrum analyzer is an electrospray ionization mass analyzer provided with a sprayer which applies high voltage for ionization and evaporation of a solution of the test sample; and the mass spectrum analyzer includes: first cooling means cooling the test sample solution before the solution is introduced to the absorption/emission/scattering spectrum analyzer and to the mass spectrum analyzer; and second cooling means cooling the sprayer and the test sample introduced to the sprayer.

Accordingly, the apparatus achieves the above-mentioned effects and is capable of effectively cooling the heat generated by the test sample in ion evaporation. Specifically, the first cooling means cools the test sample solution before it is introduced to the sprayer. The apparatus thus cools the test sample more effectively than conventional apparatuses.

The apparatus in accordance with the present invention is preferably such that the second cooling means is a separate structure from the sprayer.

Accordingly, the apparatus achieves the above-mentioned effects and is capable of directly cooling the test sample with the second cooling means. The apparatus thus effectively restricts heat generation by the test sample when high voltage is applied.

With the feature, the nebulizing gas is no longer used as the sprayer cooling means to excessively cool the sprayer. The risk of electric leakage occurring is eliminated.

Furthermore, the feature enables mass spectrometry on a test sample which is stable only at extremely low temperatures.

The apparatus in accordance with the present invention is preferably such that the second cooling means cools at least an area including a high voltage applying section of the sprayer.

The second cooling means cools at least an area including a high voltage applying section of the sprayer. This feature enables intensive cooling of the high voltage applying section, or heat source, of the sprayer and its surroundings.

The apparatus in accordance with the present invention therefore achieves the above-mentioned effects and is capable of effective cooling of the test sample to which high voltage is applied. The apparatus further lessens the thermal destruction of the molecular structure of the test sample ions when the ions are evaporated.

The apparatus in accordance with the present invention is preferably such that the second cooling means is a gas introduction tube which ejects a cold inactive gas.

The sprayer is effectively cooled, because the opening of the gas introduction tube can be moved closer to the part of the sprayer that is to be cooled.

Furthermore, since it is an introduction tube, the cold (extremely low temperature) cooling gas can be ejected near the sprayer without elevating the gas temperature. Therefore, the apparatus of the present invention effectively cools the sprayer and the test sample to which high voltage is applied. The apparatus further restricts heat generation in ion evaporation, thereby further lessening the thermal destruction of the molecular structure of the test sample ions in ion evaporation.

The apparatus in accordance with the present invention is preferably such that the cold inactive gas is ejected obliquely, at 30° to 60° to a direction in which a nebulizing gas is ejected, the nebulizing gas assisting the test sample to be ejected under the high voltage application.

The eject direction settings for the cold inactive gas in this range enable effective cooling of the sprayer without disrupting the ejection of the nebulizing gas and the test sample.

Furthermore, with the angle settings in the specified range, the cold inactive gas is ejected in the same direction as the ejected nebulizing gas. Thus, the cooled cold inactive gas, together with the nebulizing gas, assists the movement of the test samples ejected from the capillary. The cold inactive gas cools the nebulizing gas, which in turn cools the test sample ions ejected from the capillary.

The apparatus in accordance with the present invention is preferably such that the cold inactive gas is ejected at a rate less than or equal to the rate at which the nebulizing gas is ejected, the rates being measured per unit area of respective ejection openings, the nebulizing gas assisting the test sample to be ejected under the high voltage application.

As mentioned earlier, the nebulizing gas is intended to assist effective introduction of a mist of the test sample ejected from the capillary to the ion attracting electrode. The cold inactive gas should be ejected at a rate that does not affect the ejection of the nebulizing gas. By setting the ejection rate of the cold inactive gas to less than or equal to that of the nebulizing gas, the sprayer is cooled without affecting the eject direction of the mist of the test sample ejected from the capillary. The rate of ejection measured per unit area of the ejection opening is a numeric value in the units of mL/ (min.×cm²).

The apparatus in accordance with the present invention is preferably such that the first cooling means and the second cooling means are adapted so that the temperature thereof is adjustable.

The temperature of the first cooling means and the second cooling means can be adjusted so as to meet the optimal temperature conditions for the ionization and evaporation of the test sample to be analyzed. Accurate analysis is carried out in accordance with different test sample temperature conditions.

The apparatus in accordance with the present invention is preferably such that the test sample is a reaction solution and completes reaction in a few seconds after the reaction starts.

The apparatus in accordance with the present invention, if operating on such a test sample, achieves great effects. The apparatus is capable of substantially simultaneous quick measurement of multiple spectra obtained from a single sample. The apparatus gives accurate information on a reaction intermediate even if the test sample completes reaction in a few seconds after the reaction starts.

An analytical method in accordance with the present invention is characterized in that it comprises: the absorption/emission/scattering spectrum analysis step of analyzing an absorption/emission/scattering spectrum of a test sample; and the mass spectrum analysis step of controlling a quantity of test sample ions prepared by ionization and evaporation of the test sample, to analyze a mass spectrum, wherein the absorption/emission/scattering spectrum analysis step and the mass spectrum analysis step are carried out substantially simultaneously and in real time.

The method is capable of carrying out substantially simultaneous, real time absorption/emission/scattering spectroscopy and mass spectrometry on chemical reaction solutions and like test samples that are ever changing with time. The method addresses the conventional problem of different optimal concentrations and by controlling the quantity of the evaporated test sample ions. The method thus accurately analyzes and reveals, for example, the structure of a intermediate produced in a chemical reaction from the spectra obtained.

The term "in real time" here means "throughout a time." The method analyzes a test sample that is ever changing with time, such as a chemical reaction solution, throughout a time.

The method in accordance with the present invention is preferably such that: the ionization in the mass spectrum analysis step is electrospray ionization in which is used a sprayer which ionizes and evaporates a solution of the test sample under high voltage application for mass spectrometry of the test sample; said method comprising: the first cooling step of cooling the solution before the absorption/emission/scattering spectrum analysis step and the mass spectrum analysis step; and the second cooling step of cooling the sprayer and the solution cooled in the first cooling step and introduced to the sprayer and applying high voltage to the sprayer to ionize and evaporate the solution; and in the mass spectrum analysis step, mass spectrometry is carried out on the test sample cooled in the second cooling step.

Electrospray ionization can carry out mass spectrometry on the test sample in the form of solution. Since measurement can be made on the test sample solution, spectroscopy is possible in real time throughout the reaction, from the start to the end of the reaction, in the solution. As mentioned earlier, electrospray ionization exploits electrospraying. Therefore, in the identification of biopolymers, such as proteins and nucleic acids, and medical substances and the analysis of the molecular structures of organic metal complexes, electrospray ionization can readily ionize samples of these materials virtually without destroying them.

When the samples are used to analyze their reaction intermediates, the method, involving electrospray ionization, enables accurate mass spectrometry.

Furthermore, the features restrict the molecular structure of the test sample from being destroyed by the heat generated in ion evaporation.

The method in accordance with the present invention is preferably such that in the second cooling step, the sprayer is cooled before the test sample is introduced to the sprayer.

The sprayer is cooled before being fed with the test sample solution. The test sample solution is kept at low temperature until immediately before high voltage is applied to the test sample solution. The test sample solution is therefore cooled effectively. The method restricts the molecular structure of the test sample from being destroyed by the heat generated in ion evaporation.

The method in accordance with the present invention is preferably such that the test sample stable only at -45°C or lower temperatures.

An electrospray ionization mass analyzer in accordance with the present invention is, in order to solve the problem, characterized in that it comprises: a sprayer applying high voltage to a test sample for ionization and evaporation; first cooling means cooling the test sample before the test sample is introduced to the sprayer; and second cooling means cooling the sprayer and the test sample introduced to the sprayer.

Accordingly, the analyzer effectively cools the heat generated by the test sample in ionization and evaporation. A concrete description follows.

As mentioned earlier, mass spectrometry with an electrospray ionization mass spectrometer exploits electrospraying. Therefore, in the identification of biopolymers, such as proteins and nucleic acids, and medical substances and the analysis of the molecular structures of organic metal complexes, the mass spectrometry can readily ionize samples of these materials virtually without destroying them. The mass spectrometry provides an essential analytical tool in the studies related to the materials.

However, as mentioned earlier, conventional electrospray ionization mass spectrometers do not provide sufficient heating restriction for thermally unstable test samples, such as organic metal complexes. Especially, when one wants to analyze a test sample that is stable only at extremely low temperatures, the conventional electrospray ionization mass spectrometer would destroy the test sample ions. Again as mentioned earlier, the cooling schemes suggested as a solution to heat generation are not sufficient. Tokukai 2000-285847 and 2003-157793, although having employed a nebulizing gas for cooling purposes, have respective problems as mentioned earlier. Consequently, the devices are not suitable for the analysis of a test samples that is stable only at extremely low temperatures.

Accordingly, the analyzer is adapted to comprise first cooling means cooling the test sample solution before the test sample solution is introduced to the sprayer; and second cooling means cooling the sprayer and the test sample solution introduced to the sprayer. In other words, the analyzer in accordance with the present invention comprises 2-stage cooling means for the test sample to be ionized and evaporated. Especially, the first cooling means cools the test sample before it is introduced to the sprayer and thereby effectively cools the test sample when compared to conventional devices.

The analyzer in accordance with the present invention is preferably such that the second cooling means is a separate structure from the sprayer.

Accordingly, the analyzer directly cools the test sample with the second cooling means. The analyzer thus effectively restricts heat generation by the test sample when high voltage is applied.

As mentioned earlier, in the electrospray ionization mass spectrometers disclosed in Tokukai 2000-285847 and 2003-157793, the sheath tube, through which the cooled nebulizing gas flows, is connected to the sprayer. The dew forming on the outside of the sheath tube may affect the sprayer to which high voltage is applied, which could lead to leakage or an electric shock.

With the structure above, the nebulizing gas is no longer used as the sprayer cooling means to excessively cool the sprayer. The risk of electric leakage occurring is eliminated.

The analyzer of the present invention comprises 2-stage cooling means for the test sample and directly cools the test sample to which high voltage is applied. The analyzer thus effectively restricts the heat generated by the test sample ions when the ions are evaporated and is capable of carrying out mass analysis on a test sample that is stable only at extremely low temperatures.

The analyzer in accordance with the present invention is preferably such that the second cooling means cools an area including at least a high voltage applying section of the sprayer.

The electrospray ionization mass spectrometers disclosed in Tokukai 2000-285847 and 2003-157793 indirectly cool the charged test sample in a nebulizing gas and a desolvation chamber which are cooled by a refrigerant, such as liquid nitrogen, in order to restrict the heat generated by the test sample in ion evaporation, hence prevent the destruction of the molecular structure of the test sample ions. The cooling scheme is not effective. Especially, if the test sample is stable only at extremely low temperatures, the insufficient cooling has a high risk of molecular structure destruction.

Accordingly, the second cooling means is adapted to cool an area including at least a high voltage applying section of the sprayer. The feature enables intensive cooling of the high voltage applying section, or heat source, of the sprayer and its surroundings.

The analyzer therefore is capable of effective cooling of the test sample to which high voltage is applied. The analyzer further lessens the thermal destruction of the molecular structure of the test sample ions when the ions are evaporated.

The analyzer in accordance with the present invention is preferably such that the second cooling means is a gas introduction tube which ejects a cold inactive gas.

The sprayer is effectively cooled, because the opening of the gas introduction tube can be moved closer to the part of the sprayer that is to be cooled.

Furthermore, since it is an introduction tube, the cold (extremely low temperatures) cooling gas can be ejected near the sprayer without elevating the gas temperature.

Therefore, the analyzer of the present invention effectively cools the sprayer and the test sample to which high voltage is applied. The analyzer further restricts heat generation in ion evaporation, thereby further lessening the thermal destruction of the molecular structure of the test sample ions in ion evaporation.

The provision of the second cooling means does not change the structure of the conventional electrospray ionization mass spectrometer. The means is adapted so that it simply attaches to the conventional electrospray ionization mass spectrometer. The analyzer in accordance with the present invention is provided without significantly reducing the productivity of the conventional electrospray ionization mass spectrometer.

The analyzer in accordance with the present invention is preferably such that the cold inactive gas is ejected obliquely, at 30° to 60° to a direction in which a nebulizing gas is ejected, the nebulizing gas assisting the test sample solution to be ejected under the high voltage application.

The nebulizing gas is intended to assist effective introduction of a mist of the ejected test sample to the ion attracting electrode. The cold inactive gas is ejected in the direction specified above toward the sprayer. The cold inactive gas effectively cools the sprayer without changing the eject direction of the nebulizing gas. Out of the range, the cold inactive gas cannot effectively cool the sprayer if ejected at less than 30° to the eject direction of the nebulizing gas. If ejected at more than or equal to 60° to the eject direction of the nebulizing gas, the cold inactive gas ejection disrupts the eject direction of the nebulizing gas.

The eject direction settings for the cold inactive gas in the specified range enable effective cooling of the sprayer without disrupting the ejection of the nebulizing gas and the test sample.

Furthermore, with the angle settings in the specified range, the cold inactive gas is ejected in the same direction as the ejected nebulizing gas. Thus, the cooled cold inactive gas, together with the nebulizing gas, assists the movement of the test sample ejected from the capillary. The cold inactive gas cools the nebulizing gas, which in turn cools the test sample ions ejected from the capillary.

The analyzer in accordance with the present invention is preferably such that the cold inactive gas is ejected at a rate less than or equal to the rate at which the nebulizing gas is ejected, the rates being measured per unit area of the respective ejection openings, the nebulizing gas assisting the test sample solution to be ejected under the high voltage application.

As mentioned earlier, the nebulizing gas is intended to assist effective introduction of a mist of the test sample ejected from the capillary to the ion attracting electrode. The cold inactive gas should be ejected at a rate that does not affect the ejection of the nebulizing gas. By setting the ejection rate of the cold inactive gas to less than or equal to that of the nebulizing gas, the sprayer is cooled without affecting the eject direction of the mist of the test sample ejected from the capillary. The rate of ejection measured per unit area of the ejection opening is a numeric value in the units of mL/(min.×cm²).

The analyzer in accordance with the present invention is preferably such that the first cooling means and the second cooling means are adapted so that the temperature thereof is adjustable.

The temperature of the first cooling means and the second cooling means can be adjusted so as to meet the optimal temperature conditions for the ionization and evaporation of the test sample to be analyzed. Accurate analysis is carried out in accordance with different test sample temperature conditions.

In the electrospray ionization mass spectrometer disclosed in Tokukai 2000-285847 and 2003-157793, the cooled nebulizing gas is conducted the sheath tube coupled to the high voltage applying section of the sprayer. The dew forming on the outside of the sheath tube may reach the part to which voltage is applied, which may dangerously lead to leakage. The phenomenon is particularly evident with those test samples which are stable only at extremely low temperatures, because the nebulizing gas is cool excessively. Accordingly, in the present invention, an ordinary, non-cooled nebulizing gas is used. No dew forms on the outside of the sheath tube. There is no risk of electric leakage.

Therefore, in the analyzer in accordance with the present invention, even if there is a need to excessively cool the test sample and the sprayer, the nebulizing gas is not used for the cooling. The analyzer is safe.

An electrospray ionization mass analysis method in accordance with the present invention is characterized in that it comprises a sprayer which applies high voltage for ionization and evaporation of a test sample solution and also comprises: the first cooling step of cooling the test sample solution before the solution is introduced to the sprayer; and the second cooling step of cooling the sprayer and the test sample solution cooled in the first cooling step and introduced to the sprayer, wherein in the second cooling step high voltage is applied to the sprayer to ionize and evaporate the test sample solution.

According to the method, the molecular structure of the test sample is less destroyed by the heat generated by the test sample in ion evaporation.

The method in accordance with the present invention is preferably such that in the second cooling step, the sprayer is cooled before the test sample solution is introduced to the sprayer.

The sprayer is cooled before being fed with the test sample solution. The test sample solution is kept at low temperature until immediately before high voltage is applied to the test sample solution.

The test sample solution is therefore cooled effectively. The method restricts the molecular structure of the test sample from being destroyed by the heat generation in ion evaporation.

The method in accordance with the present invention is preferably such that the test sample is stable only at -45°C or lower temperatures.

### BRIEF DESCRIPTION OF DRAWINGS

Figure 1 is a perspective view of the basic structure of the analytical apparatus in accordance with the present invention.
Figure 2 is an enlarged perspective view of an ionization chamber of the analytical apparatus in accordance with the present invention.
Figure 3 shows a chemical reaction formula for an iron (III) complex and 13-HPOD in an example of the analytical apparatus in accordance with the present invention.
Figure 4(a) contains graphs showing mass spectra when a reaction of an iron (III) complex and 13-HPOD starts (= 0 seconds) and a spectrometric diagram in which the ion intensity of mass number 677 is plotted over a time. The graphs and diagram are drawn in an example of the analytical apparatus in accordance with the present invention.
Figure 4(b) contains graphs showing mass spectra 7 seconds after a reaction of an iron (III) complex and 13-HPOD starts and a spectrometric diagram in which the ion intensity of mass number 929 is plotted over a time. The graphs and diagram are drawn in an example of the analytical apparatus in accordance with the present invention.
Figure 4(c) contains graphs showing mass spectra 12 minutes after a reaction of an iron (III) complex and 13-HPOD starts and a spectrometric diagram in which the ion intensity of the mass number 911 is plotted over a time. The graphs and diagram are drawn in an example of the analytical apparatus in accordance with the present invention.
Figure 5(a) is a graph showing visible to ultraviolet absorption spectra at the time measurement starts (= 0 seconds; marked (A) in the graph) and 7 seconds into the measurement (marked (B) in the graph), drawn in an example of the analytical apparatus in accordance with the present invention.
Figure 5(b) is a graph showing visible to ultraviolet absorption spectra 7 seconds into the measurement (marked (B) in the graph) and 12 minutes into the measurement (marked (C) in the graph).
Figure 6 shows a chemical reaction formula for an iron (III) complex, 13-HPOD, and Et₃N in an example of the analytical apparatus in accordance with the present invention.
Figure 7 is a perspective view of the basic structure of an embodiment of the electrospray ionization mass spectrometer in accordance with the present invention.
Figure 8 is a chemical structural formula of a manganese (IV) methoxy complex used in an example of the electrospray ionization mass spectrometer in accordance with the present invention.
Figure 9(a) is a chemical reaction formula showing how to prepare a manganese (IV) peroxo complex on which measurement is made in an example of the electrospray ionization mass spectrometer in accordance with the present invention.
Figure 9(b) is a graph showing mass spectra of a manganese (IV) peroxo complex in an example of the electrospray ionization mass spectrometer in accordance with the present invention.
Figure 9(c) is a spectrometric diagram in which the ion intensity of a detected manganese (IV) peroxy complex (mass number 716) is plotted over a time in an example of the electrospray ionization mass spectrometer in accordance with the present invention.
Figure 10 is a perspective view of the basic structure of another embodiment of the analytical apparatus in accordance with the present invention.

### BEST MODE FOR CARRYING OUT INVENTION

### Embodiment 1

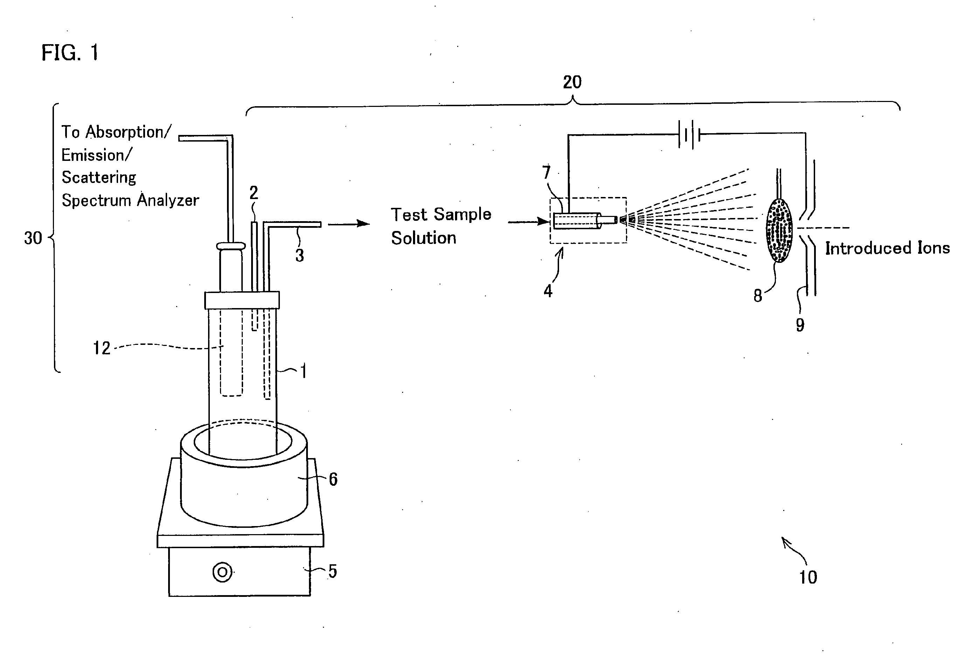

The following will describe an embodiment of the analytical apparatus in accordance with the present invention in reference to Figures 1 to 4. This is by no means limiting the present invention.

The present embodiment will describe basic principles of the analytical apparatus of the present invention. Thereafter, the analytical apparatus in accordance with the present invention and the analytic method in accordance with the present invention will be described in detail.

### (1) Basic Principles of Analytical Apparatus of the Invention

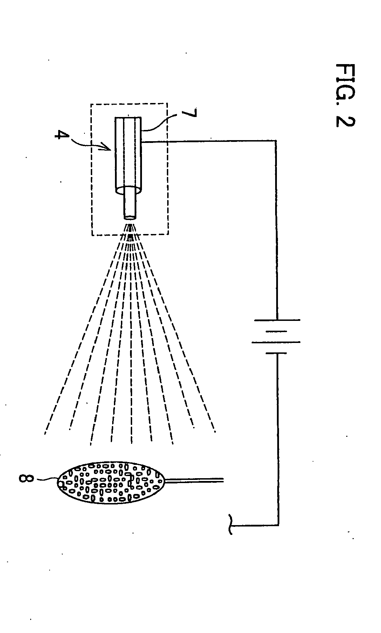

Figure 2 is a schematic showing numerous charged ions being ejected into an ionization chamber in the analytical apparatus in accordance with the present invention. As mentioned earlier, the charged ions in the ionization chamber pass through an ion attracting electrode (orifice). In the succeeding mass spectrometer section, mass spectra are measured.

As mentioned earlier, when the test sample has a high concentration with numerous test sample ions in the ionization chamber, if the numerous test sample ions flowed into the mass spectrometer section with no restriction, there could occur a large electric current and damage device circuitry.

Accordingly, as shown in Figure 2, there is provided ion introduction control means 8 closer to the sprayer than an introduction hole of the ion attracting electrode. The ion introduction control means 8 controls the quantity of test sample ions flowing into the mass spectrometer section (not shown). Thus, the quantity of test sample ions introduced to the mass spectrometer section is substantially the same as the quantity of test sample ions at an optimal concentration in a conventional mass spectrometer after ion evaporation. The mass spectra are measured in ordinary ion quantity. A specific description follows.

The ion introduction control means 8 has a mesh structure with a plurality of through holes from the ionization chamber side to the ion attracting electrode side. The through holes range in diameter from 1 µm to 5 mm. The diameter is set to a suitable value according to the wettability or another problem of the test sample. When the concentration of the test sample is higher than the optimal concentration of a test sample used in conventional mass spectrometry, high voltage is applied to the highly concentrated test sample in the ionization chamber to ionize the test sample. The test sample ions ionized and evaporated in abundance move toward the ion attracting electrode like they do in normal cases. However, the quantity of ions introduced to the ion attracting electrode is controlled by the ion introduction control means provided at the aforementioned position. The test sample ions, although generated in abundance, are filtered by the ion introduction control means: some of the test sample ions stick to the surface of the ion introduction control means, and the others transmit through the holes in the ion introduction control means and reach the ion attracting electrode side. The quantity of test sample ions introduced to the mass spectrometer section is lowered.

Accordingly, the analytical apparatus in accordance with the present invention is capable of measuring mass spectra in a normal way even if the test sample concentration is higher than the optimal concentration for analysis.

### (2) Analytical Apparatus of the Invention

Now, the analytical apparatus in accordance with the present invention will be described in detail. Figure 1 illustrates an example of the analytical apparatus of the present invention. The figure shows the basic structure of an analytical apparatus 10 for a test sample of which the concentration is regulated to more than or equal to the optimal concentration in mass spectrometry, that is, higher than the optimal concentration. The analytical apparatus 10 shown in Figure 1 includes an absorption/emission/scattering spectrum analyzer 30 and a mass spectrum analyzer 20. The analyzer 30 carries out at least one of absorption spectroscopy, emission spectroscopy, and scattering spectroscopy. The analyzer 20 carries out mass spectrometry. Both the absorption/emission/scattering spectrum analyzer 30 and the mass spectrum analyzer 20 are coupled to a reaction container 1 containing a test sample to analyze this single test sample.

The analytical apparatus 10 includes the mass spectrum analyzer 20 and the absorption/emission/scattering spectrum analyzer 30. The mass spectrum analyzer 20 applies high voltage to the test sample for ionization and evaporation. The analyzer 20 then controls the quantity of introduced test sample ions by transmitting the test sample ions through the ion introduction control means 8 in the ionization chamber, so as to carry out mass spectrometry. The absorption/emission/scattering spectrum analyzer 30 substantially simultaneously measures absorption/emission/scattering spectra on the test sample used also for mass spectrometry.

The present embodiment assumes specifically that the analytical apparatus 10 is an electrospray ionization mass spectrometer implementing electrospray ionization. This is however by no means limiting the embodiment.

The analytical apparatus 10, as shown in Figure 1, includes a reaction container 1, an inactive gas introduction tube 2, a capillary 3, a sprayer 4, a magnetic stirrer controller 5, a thermostatic bath 6, a sheath tube 7, ion introduction control means 8, an ion attracting electrode 9, and a spectrum observation probe 12. The inactive gas introduction tube 2, capillary 3, sprayer 4, sheath tube 7, ion introduction control means 8, and ion attracting electrode 9 are provided inside the mass spectrum analyzer 20. The spectrum observation probe 12 is provided inside the absorption/ emission/ scattering spectrum analyzer 30.

The reaction container 1 is loaded with a solution containing the test sample explained above and disposed in the thermostatic bath 6 (detailed later) so that it is maintained at a predetermined temperature. Also, for the same purposes, the reaction container 1 is equipped therein with a magnetic stirrer which stirs the test sample solution in the container under the control of the magnetic stirrer controller 5 (detailed later). The reaction container 1, of which the temperature is controlled as it sits in the thermostatic bath 6, can stir the test sample to make the test sample have a uniform temperature. The inactive gas introduction tube 2, capillary 3, and spectrum observation probe 12 (detailed later) are provided in the upper part of the reaction container 1. To fix these members, a rubber seal is disposed on the reaction container 1. The reaction container 1 may be of any structure so long as it can be placed in the thermostatic bath 6. The container 1 may be made of glass, stainless steel, or like material.

The magnetic stirrer controller 5, as mentioned earlier, is provided to stir the test sample solution in the reaction container 1 disposed in the thermostatic bath 6. The present embodiment assumes that the stirring means is the magnetic stirrer controller 5. This is however by no means limiting the embodiment. Any stirring means may be used so long as it is capable of making the test sample solution have a uniform temperature and concentration. The stirring means may be a mechanical one.

The solvent for the test sample solution may be any solvent for a test sample solution used with conventional electrospray ionization mass spectrometers. A suitable solvent in view of the test sample's nature may be used. Preferred examples include methanol and an acetonitrile solution (detailed later). The concentration of the test sample solution may vary with the ionization efficiency of the test sample in electrospray. For proteins, nucleic acids, and like polymer compounds, the concentration is preferably in the range of about 1 to 20 pmol/µL. For low molecular compounds (1000 Da or less), the concentration is preferably in the range of about 1 to 50 ng/µL.

The inactive gas introduction tube 2 has an end sticking out above the top of the reaction container 1. More specifically, the inactive gas introduction tube 2 has an end inside the reaction container 1 where the end does not touch the test sample solution. An inactive gas is introduced through the other end from an inactive gas supply (not shown). The pressure of the introduced inactive gas is regulated by a pressure regulator (not shown). As a result of the pressure regulation of the inactive gas, the test sample solution in the reaction container 1 is fed to the sprayer 4 through the capillary 3 (detailed later). Specifically, it is preferable if the pressure of the inactive gas is regulated so that the flow rate of the test sample solution from the capillary 3 to the sprayer 4 is 2 to 4 µL/min., more preferably about 3 µL/min. The inactive gas introduction tube 2 may be constructed of, for example, a PTFE tube with an internal diameter of 0.8 mm and an external diameter of 1.58 mm. The inactive gas introduction tube 2 of the present embodiment is by no means limited to such a structure. The inactive gas may be, for example, argon gas.

The capillary 3 connects the reaction container 1 to the sprayer 4. The test sample solution in the reaction container 1 is pushed by the pressure of the inactive gas introduced from the inactive gas introduction tube 2, thereby flowing through the capillary 3 to the sprayer 4. The capillary 3 is preferably short so as to minimize changes in the temperature of the test sample solution which was controlled in the thermostatic bath 6 and carry out the measurements at as closest times as possible. For example, a deactivated silica capillary tube measuring 20 cm in length and 0.075 mm in internal diameter may be used. The capillary 3 of the present embodiment is by no means limited to such a material and dimensions.

The sprayer 4 has a double layer structure: the capillary 3 and the sheath tube 7 (detailed later) extend along a common axis. As high voltage is applied to the sprayer 4, the test sample solution introduced to the capillary 3 is ejected from an end of the capillary 3. The voltage applied to the sprayer 4 is preferably in the range of about 3 to 6 kV, more preferably, in the range of about 4 to 5 kV.

The operator may also adjust the tip of the sprayer 4 to an optimal position with a position adjustment knob (not shown) while observing the obtained spectra of the test sample, to obtain optimal spectra.

The thermostatic bath 6, as mentioned earlier, acts as temperature control means which controls the temperature of the test sample solution in the reaction container 1. The thermostatic bath 6 may, for example, contain water, and the temperature of the bath 6 is controlled. The temperature of the test sample solution in the reaction container 1 is controlled by placing the reaction container 1 in the thermostatic bath 6. In addition, for example, when the test sample solution is controlled under the freezing point, liquid nitrogen can be used. The test sample solution can be cooled by immersing the reaction container 1 in liquid nitrogen. The use of liquid nitrogen enables measurement on test samples that are stable only at low temperatures like extremely low temperatures.

The temperature control means which controls the temperature of the test sample, like the thermostatic bath 6, is by no means limited, as mentioned earlier, to a refrigerant such as water. Furthermore, metal structured to tightly hold the reaction container 1 may be used. With the reaction container 1 disposed in tight contact with the metal, the temperature of the test sample solution in the reaction container 1 can be controlled by controlling the temperature of the metal using, for example, an electronic device. The metal is preferably copper, aluminum, or another metal with relatively high thermal conductivity.

The sheath tube 7, as mentioned earlier, is disposed outside the capillary 3, sharing a common axis with the capillary 3. The tube 7 ejects a nebulizing gas fed from a nebulizing gas supply (not shown) in the same direction as the capillary 3 ejects the test sample..

The ion introduction control means 8 is provided to control the quantity of the test sample ions introduced to the ion attracting electrode 9 ejected from the tip of the capillary 3 when high voltage is applied to the sprayer 4. A specific description follows.

The ion introduction control means 8 is supported by support means (not shown) inside the ionization chamber. Specifically, the means 8 is located between the position where the test sample ions are evaporated and ejected from the tip of the capillary 3 and the ion attracting electrode 9. The ion introduction control means 8 is disposed so that it is substantially perpendicular to the direction of movement of the evaporated test sample ions.

The ion introduction control means 8 preferably has a mesh of multiple through holes. The openings of the through holes are preferably provided to face the test sample ions ejection side of the capillary 3 and the introduction side of the ion attracting electrode 9. The ion introduction control means 8 preferably has such a size that it can cover the area in which the test sample ions can spread when they are ejected from the capillary 3 toward the ion attracting electrode 9. The means 8 preferably has such a size that it can cover at least the introduction hole of the ion attracting electrode 9. When the ion introduction control means 8 has such a size that it can cover the test sample ion spread area, the ion introduction control means 8 may be disposed at the aforementioned position, that is, between the position where the test sample ions are evaporated and ejected from the tip of the capillary 3 and the ion attracting electrode 9. The size of the means 8 is not limited in any particular manner. However, if the ion introduction control means 8 has no such a size that it can cover the area, the ion introduction control means 8 may preferably be disposed near the introduction hole of the ion attracting electrode 9. If the ion introduction control means 8 was provided near the capillary 3 when the ion introduction control means 8 has no such a size that it can cover the test sample ion spread area, some test sample ions could spread out of the control range for the ion introduction control means 8 and reach the ion attracting electrode 9. This would make it difficult to accurately control the quantity of test sample ions with the ion introduction control means 8. The through holes preferably measure from 1 µm to 5 mm in diameter. The evaporated test sample ions show different wettability depending on their type. With such a diameter range specification, the diameter can be set to a suitable value in accordance with the nature of the ions. The ion introduction control means 8 is preferably relatively thin. Specifically, the means 8 has a thickness from 1 µm to 1 mm. The thickness of the ion introduction control means 8 refers to the distance the test sample ions travel as they move passing through the ion introduction control means 8. If the ion introduction control means 8 was relatively thick, the test sample ions could stick to the walls of the through holes while the through holes pass through the holes. This would make accurate control with the ion introduction control means 8 impossible.

The ion introduction control means 8 allows the operator to adjust the means 8 to an optimal position with a position adjustment knob (not shown) while observing the obtained spectra of the test sample. This enables an optimal spectrum to be obtained.

The ion introduction control means 8 is attachable/detachable. When the test sample has an optimal concentration for mass spectrometry, the means 8 can be removed from the position shown in Figure 2. The analytical apparatus 10 in the present embodiment does not necessarily carry out mass spectrometry and absorption/emission/scattering spectroscopy. The apparatus 10 is capable of separate mass spectrometry and absorption/emission/scattering spectroscopy.

As described in the foregoing, the analytical apparatus 10 of the present embodiment differs from conventional mass spectrometers in that it includes the ion introduction control means 8 between the tip of the capillary 3 and the ion attracting electrode 9. The provision of the means 8 enables accurate mass spectrometry even when the test sample has a higher concentration than the optimal concentration for mass spectrometry. The analytical apparatus 10 of the present embodiment is able to substantially simultaneously carry out absorption/emission/scattering spectroscopy and mass spectrometry on a single test sample which has a higher concentration than the optimal concentration for mass spectrometry.

The ion attracting electrode 9 attracts the charged test sample ejection from the sprayer 4. The charged test sample ions attracted and passed through the ion attracting electrode 9 are analyzed for mass number in a mass spectrometer section (not shown).

The spectrum observation probe 12, as mentioned earlier, is provided so that an end thereof is in the test sample in the reaction container 1. The spectrum observation probe 12 measures absorption/emission/scattering spectra of the test sample in the reaction container 1.

Ionization in the analytical apparatus 10 of the present embodiment is preferably electrospray ionization. The use of electrospray ionization enables mass spectrometry of the test sample in the solution form. The capability of test sample solution measurement enables real-time spectrum analysis of a solution from the start of a reaction to the end of the reaction. As mentioned earlier, electrospraying is used. Therefore, in the identification of biopolymers, such as proteins and nucleic acids, and medical substances and the analysis of the molecular structures of organic metal complexes, samples can be readily ionized without destroying them.

When the samples are used to analyze the reaction intermediates, the use of electrospray ionization enables accurate mass spectrometry.

The analytical apparatus 10 of the present embodiment may simultaneously implement not only two spectroscopies, e.g., mass spectrometry with absorption spectroscopy or mass spectrometry with emission spectroscopy, but three or more spectroscopies, e.g., mass spectrometry with absorption spectroscopy and emission spectroscopy, and also four spectroscopies, e.g., mass spectrometry with absorption spectroscopy, emission spectroscopy, and scattering spectroscopy. To allow the operator to select any necessary spectroscopies for analysis, the analytical apparatus 10 is provided with spectroscopy select means (not shown).

### (3) Analytic Method of the Invention

Next, the aforementioned analytic method in accordance with the present invention will be described.

According to the analytic method, a solvent is first added to a test sample to prepare a solution of the test sample. The solution is then put into the reaction container 1 and placed in the thermostatic bath 6 of which the temperature is adjusted. The test sample solution in the reaction container 1 is stirred with a magnetic stirrer under the control of the magnetic stirrer controller 5.

Next, an inactive gas is ejected into the reaction container 1 by adjusting a pressure regulator for the inactive gas which is connected to an end of the inactive gas introduction tube 2. The test sample solution is thus introduced to the sprayer 4 through the capillary 3. High voltage is applied to the test sample solution introduced to the sprayer 4 so that the solution is ejected from the tip of the capillary 3.

A mist of a large number of charged particles of the test sample, ejected from the tip of the capillary 3, is presumed to be thereafter deprived of its solvent due to evaporation and in a dry gas (cooled nitrogen gas). With the loss of the solvent, the particles probably grow smaller in size, and the large number of charged test sample ions presumably are freed from the solvent and finally separate from the particles. The charged test sample ions, separated from the particles, are controlled in quantity by the ion introduction control means 8 before introduced to the introduction hole of the ion attracting electrode 9. The optimal quantity of charged test sample ions introduced to the ion attracting electrode 9 is analyzed in a mass spectrometer section (not shown). A mass spectrum analysis step is implemented by these procedures.

According to the analytic method of the present invention, the test sample solution in the reaction container 1 is subjected to at least one of absorption, emission, and scattering spectroscopies by the spectrum observation probe 12 substantially simultaneously and parallel with the mass spectrum analysis step. This step is an absorption/emission/scattering spectrum analysis step.

The analytic method of the present embodiment may simultaneously implement not only two spectroscopies, e.g., mass spectrometry with absorption spectroscopy or mass spectrometry with emission spectroscopy, but three or more spectroscopies, e.g., mass spectrometry with absorption spectroscopy and emission spectroscopy, and also four spectroscopies, e.g., mass spectrometry with absorption spectroscopy, emission spectroscopy, and scattering spectroscopy. In these cases, a suitable spectrum can be selected for analysis using spectroscopy select means (not shown).

### Embodiment 2

### (1) Electrospray Ionization Mass Analyzer of the Invention

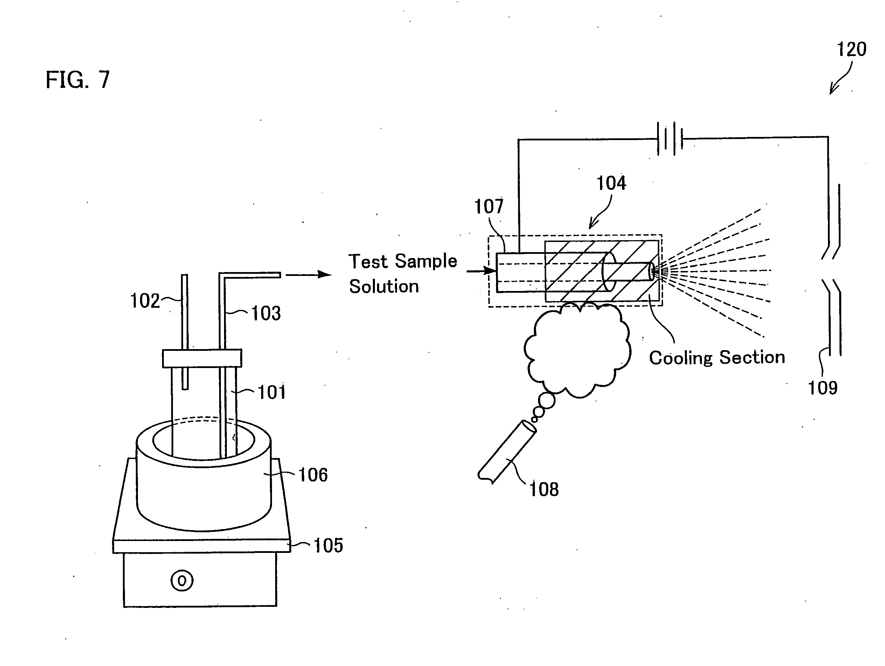

An embodiment of the electrospray ionization mass analyzer of the present invention will be described in reference to Figure 7. This is however by no means limiting the invention.

An electrospray ionization mass spectrometer 120 of the present invention, as mentioned earlier, implements very soft ionization based on electrospraying. The spectrometer 120 is an essential analytical tool to identify biopolymers, such as protein and nucleic acids, and medical substances and when the molecular structures of organic metal complexes are the test samples. The electrospray ionization mass spectrometer 120 is an especially preferable analytical tool to work on test samples that are practically stable only at extremely low temperatures and become unstable when heated. In the present embodiment, the extremely low temperature is defined as about -45°C. Examples of the samples that are stable only at about -45°C include manganese (IV) peroxo complexes and metal hydroperoxo complexes (detailed later). Preferable test samples for the present invention are by no means limited to these samples.

Figure 7 is a schematic showing the structure of the electrospray ionization mass spectrometer 120 of the present invention. The electrospray ionization mass spectrometer 120 contains a reaction container 101, an inactive gas introduction tube 102, a capillary 103, a sprayer 104, a magnetic stirrer controller 105, a low temperature bath 106 (first cooling means), a sheath tube 107, a cooling gas introduction tube 108 (second cooling means), and an ion attracting electrode 109.

The reaction container 101 is loaded with a solution containing the test sample explained above and disposed in the low temperature bath 106 (detailed later) so that it is maintained at a predetermined temperature. Also, for the same purposes, the reaction container 101 is equipped therein with a magnetic stirrer which stirs the test sample solution in the container under the control of the magnetic stirrer controller 105 (detailed later). The reaction container 101, being cooled as it sits in the low temperature bath 106, can stir the test sample to make the test sample have a uniform temperature. The inactive gas introduction tube 102 and capillary 103 are provided in the upper part of the reaction container 101. To fix these members, a rubber seal is disposed on the reaction container 101. The reaction container 101 may be of any structure so long as it can be placed in the low temperature bath 106. The container 101 may be made of glass, stainless steel, or like material.

The magnetic stirrer controller 105, as mentioned earlier, is provided to stir the test sample solution in the reaction container 101 disposed in the low temperature bath 106. The present embodiment assumes that the stirring means is the magnetic stirrer controller 105. This is however by no means limiting the embodiment. Any stirring means may be used so long as it is capable of making the test sample solution have a uniform temperature. The stirring means may be a mechanical one.

The solvent for the test sample solution may be any solvent for a test sample solution used with conventional electrospray ionization mass spectrometers. A suitable solvent in view of the test sample's nature may be used. Preferred examples include acetonitrile and methanol used singly, as well as a methanol-dichloromethane solution (detailed later). The concentration of the test sample solution may vary with the ionization efficiency of the test sample in electrospray. For proteins, nucleic acids, and like polymer compounds, the concentration is preferably in the range of about 1 to 20 pmol/µL. For low molecular compounds (1000 Da or less), the concentration is preferably in the range of about 1 to 50 ng/µL. Especially for the preferable test samples for the electrospray ionization mass spectrometer 120 that are stable only at extremely low temperatures (e.g., -45°C), the concentration may be 100 µmol/L.

The inactive gas introduction tube 102 has an end sticking out above the top of the reaction container 101. More specifically, the inactive gas introduction tube 102 has an end inside the reaction container 101 where the end does not touch the test sample solution. An inactive gas is introduced through the other end from an inactive gas supply (not shown). The pressure of the introduced inactive gas is regulated by a pressure regulator (not shown). As a result of the pressure regulation of the inactive gas, the test sample solution in the reaction container 101 is fed to the sprayer 104 through the capillary 103 (detailed later). The inactive gas introduction tube 102 may be constructed of, for example, a PTFE tube with an internal diameter of 0.8 mm and an external diameter of 1.58 mm. The inactive gas introduction tube 102 of the present embodiment is by no means limited to such a structure. The inactive gas may be, for example, argon gas.

The capillary 103 connects the reaction container 101 to the sprayer 104. The test sample solution in the reaction container 101 is pushed by the pressure of the inactive gas introduced from the inactive gas introduction tube 102, thereby flowing through the capillary 103 to the sprayer 104. The capillary 103 is preferably relatively short so as to minimize rises in the temperature of the test sample solution which was cooled in the low temperature bath 106. For example, a deactivated silica capillary tube measuring 20 cm in length and 0.075 mm in internal diameter may be used. The capillary 103 of the present embodiment is by no means limited to such a material and dimensions.

The sprayer 104 has a double layer structure: the capillary 103 and the sheath tube 107 (detailed later) extend along a common axis. As high voltage is applied to the sprayer 104, the test sample solution introduced to the capillary 103 is ejected from an end of the capillary 103. The voltage applied to the sprayer 104 is preferably in the range of about 3 to 6 kV, more preferably, in the range of about 4 to 5 kV.

The low temperature bath 106, as mentioned earlier, acts to cool the test sample solution in the reaction container 101. Liquid nitrogen as an example can be used to cool the test sample solution. The test sample solution can be cooled by immersing the reaction container 101 in liquid nitrogen. As mentioned earlier, the present invention is capable of analyzing test samples that are stable only at -45°C or lower temperatures. Therefore, liquid nitrogen is not the only possibility. Any other temperature adjusting means may be used to control the temperature of the test sample solution so long as it can maintain the temperature of the test sample solution at or below -45°C.

Furthermore, The low temperature bath 106 is by no means limited to a refrigerant, such as liquid nitrogen. Metal structured to tightly hold the reaction container 101 may be used. With the reaction container 101 disposed in tight contact with the metal, the test sample solution in the reaction container 101 can be maintained at low temperature by keeping the metal at low temperature using an electronic device or other temperature adjusting means. The metal is preferably copper, aluminum, or another metal with relatively high thermal conductivity.

The sheath tube 107, as mentioned earlier, is disposed outside the capillary 103, sharing a common axis with the capillary 103. The tube 107 ejects a nebulizing gas fed from a nebulizing gas supply (not shown) in the same direction as the capillary 103 ejects the test sample. The ejection of the nebulizing gas assists a mist of the test sample ejected from the capillary 103 upon high voltage application to be effectively introduced to the ion attracting electrode.

The nebulizing gas is preferably used at normal temperature. Accordingly, no dew forms outside the sheath tube (such dew was a problem with conventional electrospray ionization mass spectrometers). There is no risk of electric leakage (shock) through dew when high voltage is applied to the sprayer 104.

The cooling gas introduction tube 108 cools the sprayer 104 to which high voltage is applied. The tube 108 also restricts rise in the temperature of the test sample solution ejected from the capillary 103. A specific description follows.

The cooling gas introduction tube 108 is supported by support means (not shown). Specifically, the tube 108 is so supported by the support means that the cold inactive gas ejected from the cooling gas introduction tube 108 move toward a high voltage applying section of the sprayer 104. The high voltage applying section is a part of the sprayer 104 (shaded with slant lines in the figure) which extends from where the heat generation by the test sample from the capillary 103 starts with the high voltage application to where the test sample is ejected from the capillary 103.

To describe it in more detail, the cold inactive gas is ejected obliquely, preferably at 30° to 60°, more preferably at about 45°, to the direction in which the nebulizing gas and the test sample solution are ejected. The angle range is thus specified for the following reasons. The cold inactive gas cannot effectively cool the sprayer if ejected at less than 30° to the eject direction of nebulizing gas. If ejected at more than or equal to 60° to the eject direction of the nebulizing gas, the cold inactive gas ejection disrupts the eject direction of the nebulizing gas. By specifying the eject direction of the cold inactive gas in the range of 30° to 60° to the eject direction of the nebulizing gas and the test sample solution, the sprayer can be effectively cooled without disrupting the ejection of the nebulizing gas and the test sample.

The rate of ejection of the cold inactive gas measured per unit area of its ejection opening is preferably less than or equal to that of the nebulizing gas ejected from the sheath tube 107 measured per unit area of its ejection opening. The nebulizing gas, as mentioned earlier, is intended to assist effective introduction of a mist of the test sample ejected from the capillary to the ion attracting electrode. The cold inactive gas should be ejected at a rate per unit area of its ejection opening that does not affect the direction and rate of ejection of the nebulizing gas measured per unit area of its ejection opening. Accordingly, the cold inactive gas is ejected, for example, at 500 mL/(min.×cm²) as measured at the ejection opening.

By using the cooling gas introduction tube 108, which meets these two conditions, the cold inactive gas ejected from the cooling gas introduction tube 108 does not disrupt the ejection of the nebulizing gas from the sheath tube 107 and of the test sample solution from the capillary 103, whereas the sprayer 104 is cooled.

The cooling gas introduction tube 108 is, for example, a Teflon tube with an internal diameter of 0.6 mm. This is however by no means limiting the embodiment.

Accordingly, the electrospray ionization mass spectrometer 120 of the present embodiment differs from the electrospray ionization mass spectrometers of Tokukai 2000-285847 and 2003-157793. The cooling gas introduction tube 108 is provided as a separate structure from the sprayer 104 to which high voltage is applied. Therefore, no dew forms on the sprayer 104 even when dew forms outside the cooling gas introduction tube 108. In the electrospray ionization mass spectrometer 120, no electric leakage (shock) is caused by the dew forming on the sprayer 104. As mentioned previously, such dew was a problem with the electrospray ionization mass spectrometers of Tokukai 2000-285847 and 2003-157793. Therefore, even when analysis samples are stable only at temperatures like extremely low temperatures, the electrospray ionization mass spectrometer 120 can sufficiently cool the sprayer 104 and simultaneously restrict rise in temperature that accompanies the evaporation of the ions in the test sample solution. Safe, accurate analysis becomes possible.

Also, as mentioned earlier, the test sample solution is cooled in advance in the low temperature bath 106, capable of minimizing the heat generation by the test sample that accompanies ion evaporation. Accordingly, even when samples are stable only at temperatures like extremely low temperatures, it is now possible to limit the destruction of the molecular structure of the sample ions by the heat generation that accompanies the ion evaporation.

Similarly to the low temperature bath 106, the temperature of the cooling gas introduction tube 108 is adjustable with temperature adjusting means. Accordingly, the test sample can be cooled on the basis of the temperature characteristic of the test sample, that is, the temperature at which the test sample is structurally most stable. Therefore, the spectrometer 120 is adaptable to the temperature conditions of different test samples, causing limited molecular structure destruction in ion evaporation. Accurate analysis is possible.

The ion attracting electrode 109 attracts the charged test sample ejection from the sprayer 104. The charged test sample ions attracted and passed through the ion attracting electrode 109 are analyzed in a mass analyzer (not shown).

The operator can adjust the tip of the sprayer 104 to an optimal position with a position adjustment knob (not shown) while observing the obtained spectra of the test sample, to obtain optimal spectra.

### (2) Electrospray Ionization Mass Spectrometry of the Invention

Next, electrospray ionization mass spectrometry in accordance with the present invention will be described.

Electrospray ionization mass spectrometry begins with the addition of a solvent to a test sample to prepare a test sample solution. The solution is then put into the reaction container 101 and placed and cooled in the low temperature bath 106 of which the temperature is adjusted (first cooling step). In the first cooling step, the test sample solution is stirred with a magnetic stirrer under the control of the magnetic stirrer controller 105.

The sprayer 104 is cooled before the test sample solution is introduced into the sprayer 104 by the cold inactive gas at -45°C which is fed through the cooling gas introduction tube 108.

Next, an inactive gas is ejected into the reaction container 101 by adjusting a pressure regulator for the inactive gas which is connected to an end of the inactive gas introduction tube 102. The test sample solution is thus introduced to the sprayer 104 through the capillary 103. High voltage is applied to the test sample solution introduced to the sprayer 104 while the solution is being cooled down in the cooling gas introduction tube 108 (second cooling step). The test sample solution, upon the high voltage application, is ejected from the tip of the capillary 3 by electrospraying.

A mist of charged particles of the test sample, ejected from the tip of the capillary 103, is thereafter presumed to be deprived of its solvent due to evaporation and in a dry gas (cooled nitrogen gas). With the loss of the solvent, the particles probably grow smaller in size, and the charged test sample ions presumably are freed from the solvent and finally separate from the particles. The charged test sample ions, separated from the particles, are introduced past the ion attracting electrode 109 to a mass analyzer (not shown) for mass spectrometry (mass analysis step).

The mass analyzer may be a conventional, publicly known mass analyzer used in typical electrospray ionization mass spectrometry. The analyzer is not limited in any particular manner.

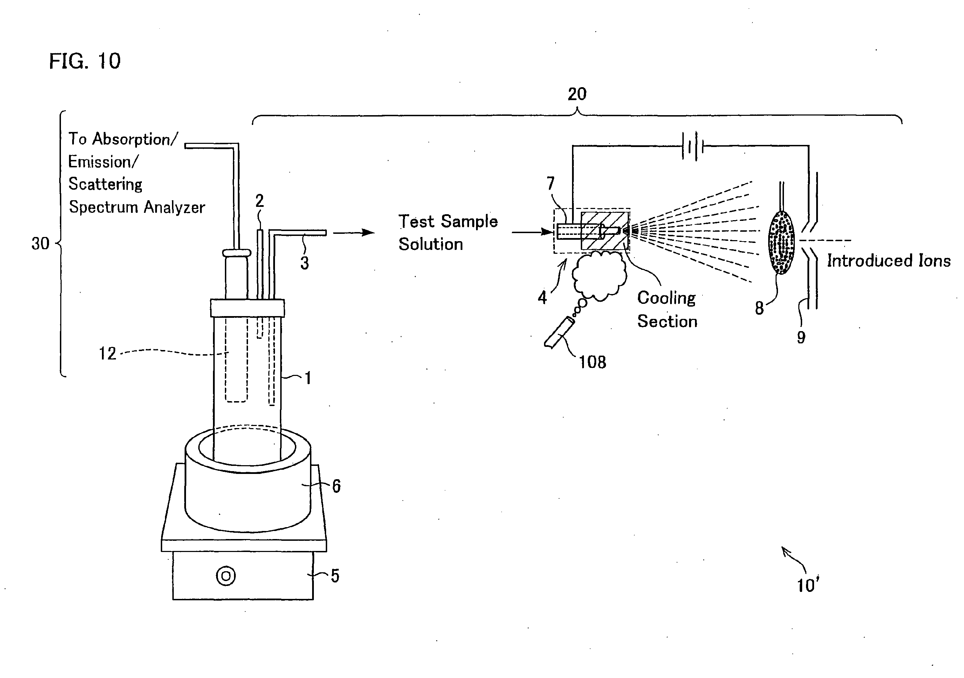

The present invention may include the cooling gas introduction tube of the present embodiment in the analytical apparatus 1 described in embodiment 1. As shown in Figure 10, the analytical apparatus of the present invention may be an analytical apparatus 10' that includes the low temperature bath 106, the cooling gas introduction tube 108, and the absorption/emission/scattering spectrum analyzer 30. When, for example, the test sample becomes slow to reaction depending on the temperature of the test sample, the temperature control using the low temperature bath 106 and the cooling gas introduction tube 108 enables good measurement on reaction intermediates. In addition, the cooling gas introduction tube 108 effectively restricts test sample from heating upon high voltage application. The structure of the analytical apparatus 10' thereby can substantially simultaneously implement mass spectrometry and absorption, emission, and scattering spectroscopy even if the test sample is stable only at extremely low temperatures.

The following will describe the present invention by means of working examples in detail. This is however by no means limiting the invention.

### Example 1: Analytical Apparatus

Next, will be described an example of the analytical apparatus of the present invention where the analytical apparatus 10 shown in Figure 1 is used to investigate the mechanism of an oxidation reaction involving an iron (III) complex. Specific description follows. An iron (III) complex is artificially synthesized as an active center model complex for lipoxygenase, or enzyme which adds two oxygens to a substrate (Seiji, Ogo; Ryo, Yamahara; Mark, Roach; Tomoyoshi, Suenobu; Michihiko, Aki; Takashi, Ogura; Teizo, Kitagawa; Hideki, Masuda; Shunichi, Fukuzumi; Yoshihito, Watanabe. Inorg. Chem. 2002, 41, 5513-5520). The present example presents analysis of the reaction of the iron (III) complex and 13-HPOD (13(S)-HydroPeroxy(9Z,11E)-OctadecaDienoic acid) by simultaneous mass spectrometry and visible to ultraviolet absorption spectroscopy of the example.

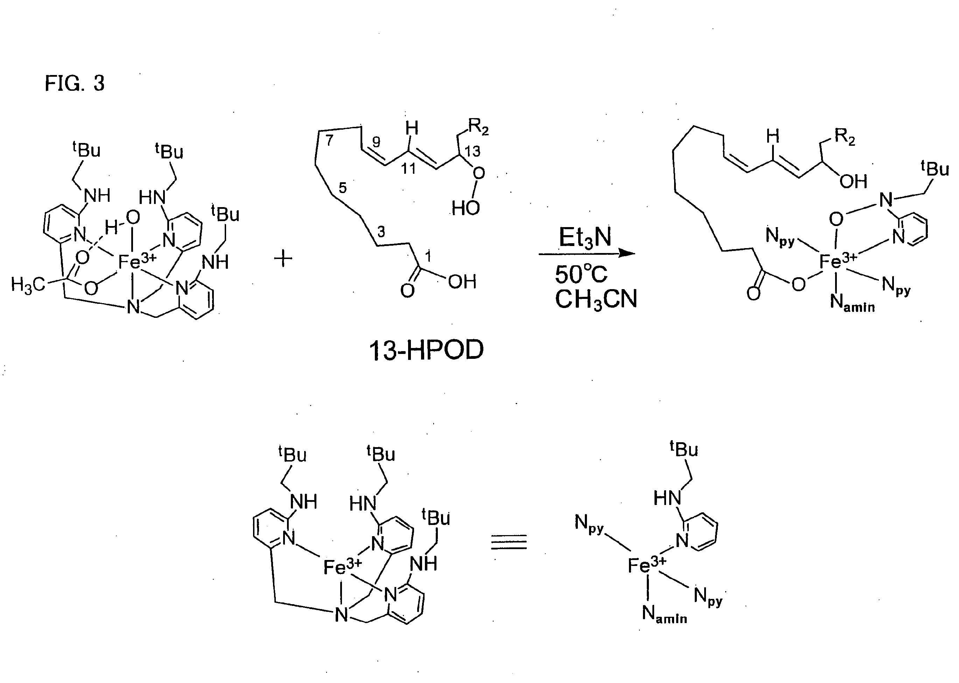

Figure 3 shows a chemical reaction formula for the iron (III) complex and 13-HPOD of the present example.

Detailed study of the enzyme model reaction will give not only an important insight for the investigation of the metabolism and aging mechanism of a life form, but a highly useful insight for the development of new oxidation reaction catalysts.

An acetonitrile solution (3 mL, 500 µM) of the iron (III) complex was prepared in the reaction container 1 shown in Figure 1 using acetonitrile which was completely deaerated and dehydrated in an inactive gas atmosphere. The solution was maintained at -40°C to 50°C in the thermostatic bath 6 and stirred with the magnetic stirrer controlled by the magnetic stirrer controller 5.

Next, the pressure of the argon gas coupled to an end of the inactive gas introduction tube 2 was adjusted so that the test sample had a flow rate of about 3 µL/min. when it passed through the capillary 3. Mass spectrometry and visible to ultraviolet absorption spectroscopy of the test sample were thus started.

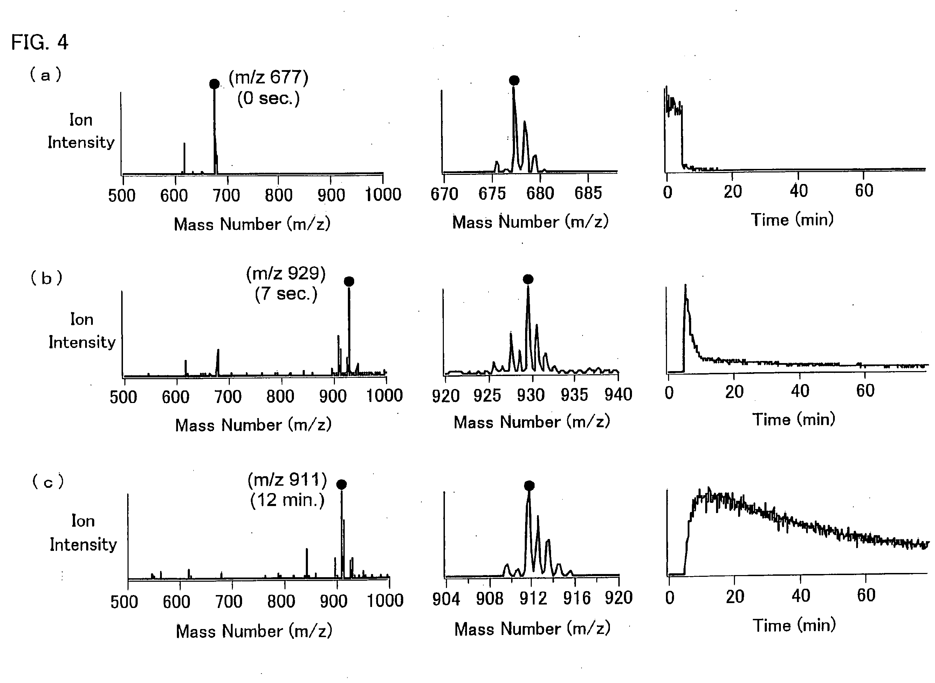

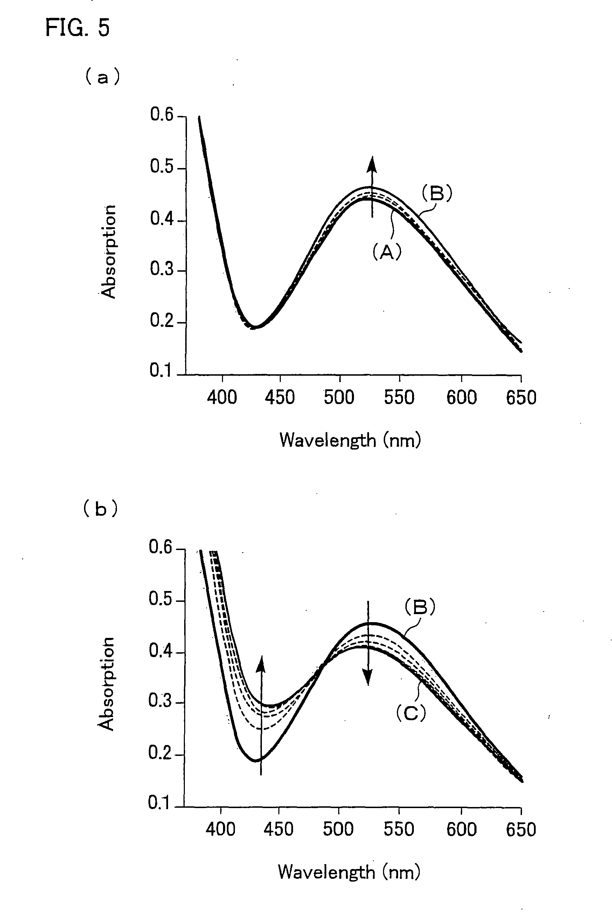

Next, 13-HPOD (molecular weight 312.4) was added to the acetonitrile solution containing the iron (III) complex in the reaction container 1, using a syringe, in a 5-to-1 mole-equivalent ratio to the iron (III) complex (2.3 mg, 7.4 µmol). To activate the 13-HPOD, a base Et3N (triethylamine; molecular weight 101.2) was added to the iron (III) complex at a 1-to-1 mole-equivalent ratio (150 µL, 1.5 µmol), which triggered a reaction. Electrospray mass spectrometry (cation mode) and visible to ultraviolet absorption spectroscopy were simultaneously carried out on these test samples. Results are shown in Figures 4 and 5. Figure 4 shows measurements of electrospray mass spectrometry. Figure 4(a) shows electrospray mass spectra when the reaction started (0 seconds). Figure 4(b) shows electrospray mass spectra 7 seconds after the reaction started. Figure 4(c) shows electrospray mass spectra 12 minutes after the reaction started. Figures 4(a) to 4(c) also include spectrometric diagrams in which the ion intensity for the spectrum which is the highest at the respective reaction times in Figures 4(a) to 4(c) is plotted against time. Figure 5 shows measurements of visible to ultraviolet absorption spectroscopy. Figure 5(a) shows visible to ultraviolet absorption spectra at the time the measurement started (0 seconds; marked (A) in the graph) and 7 seconds after (marked (B) in the graph). Figure 5(b) shows visible to ultraviolet absorption spectra 7 seconds (marked (B) in the graph) and 12 minutes (marked (C) in the graph) after the reaction started.

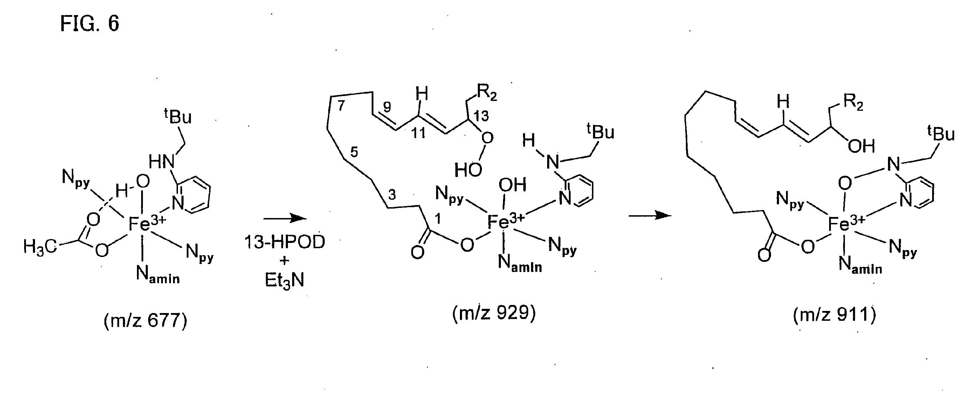

The graphs indicate that the iron (III) complex (molecular weight 677) was converted to an intermediate (mass number 929) immediately after the reaction started (7 seconds or less into the reaction) and completely converted to a compound (molecular weight 911) about 12 minutes after the reaction started. Figure 6 is a chemical reaction formula involving an iron (III) complex, 13-HPOD, and Et3N.

It is very difficult to follow the reaction in which the first stage reaction ends so quickly (7 seconds or less into the reaction) as in the present example, because if electrospray mass spectrometry and visible to ultraviolet absorption spectroscopy are separately carried out, subtle causal and temporal relationship between the two spectra cannot be analyzed. The present invention, however, carries out substantially simultaneous, real-time electrospray mass spectrometry and visible to ultraviolet absorption spectroscopy, thus being capable of readily analyze subtle causal and temporal relationship between the two spectra. Important insight is gained as to reaction intermediates.

The present invention is by no means limited to the description of the embodiments above, but may be altered within the scope of the claims.

For example, the present invention also encompasses a method and apparatus of substantially simultaneous, real-time mass spectrometry and absorption, emission, and scattering spectroscopy on a test sample.

The present invention also encompasses the use of an electrospray mass analytic apparatus to carry out mass spectrometry.

The present invention also encompasses, as the apparatus and method of substantially simultaneous, real-time spectrometry and spectroscopy, a method and apparatus of not only two simultaneous spectroscopies, e.g., mass spectrometry with absorption spectroscopy or mass spectrometry with emission spectroscopy, but three or more simultaneous spectroscopies, e.g., mass spectrometry with absorption spectroscopy and emission spectroscopy.

The present invention also encompasses an analytic method for a test sample which carries out absorption/emission/scattering spectroscopy on a test sample of which the concentration is adjusted to a high value as required in the spectroscopy and simultaneously supplies the test sample to an electrospray mass spectrometer to which is attached an ionization chamber modified to introduce a high concentration sample, by using inactive gas pressure, to carry out mass spectrometry on the test sample.

The present invention also encompasses, as the ionization chamber modified to introduce a high concentration sample, an ionization chamber, a meshed, plastic ion introduction quantity control plate disposed before an ion attracting electrode (orifice) which is an introduction hole for charged ions to the mass spectrometer section.

The present invention also encompasses the meshed, plastic ion introduction quantity control plate capable of being moved to the front/back, left/right, or up/down.

### Example 2: Electrospray Ionization Mass Spectrometer

As an example of the electrospray ionization mass analyzer of the present invention, the electrospray ionization mass spectrometer 120 shown in Figure 7 was used to carry out mass spectrometry on a manganese complex at low temperature. Specific description follows.

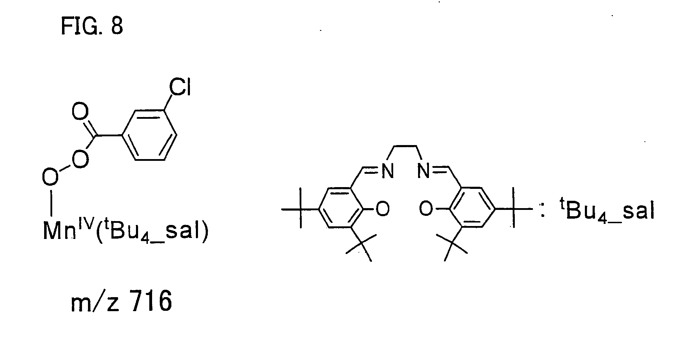

Figure 8 shows a chemical structural formula of a manganese (IV) peroxo complex used in the present example. The following will describe mass spectrometry on the manganese (IV) peroxo complex.

A 3% methanol-dichloromethane solution (5 mL, 100 µM) of the manganese (IV) methoxy complex was prepared using dichloromethane and methanol which was completely deaerated and dehydrated. The 3% methanol-dichloromethane solution of the manganese (IV) methoxy complex was placed in the reaction container 101 shown in Figure 7. The solution was maintained at -45°C in the low temperature bath 106 and stirred with the magnetic stirrer controlled by the magnetic stirrer controller 105.

Next, the sprayer 104 was cooled in nitrogen gas adjusted to -45°C and fed via the cooling gas introduction tube 108. The pressure of the argon gas coupled to an end of the inactive gas introduction tube 102 was adjusted so that the test sample (3% methanol-dichloromethane solution of the manganese (IV) methoxy complex) had a flow rate of about 3 µL/min. when it passed through the capillary 103. Mass spectrum analysis of the test sample was thus started.

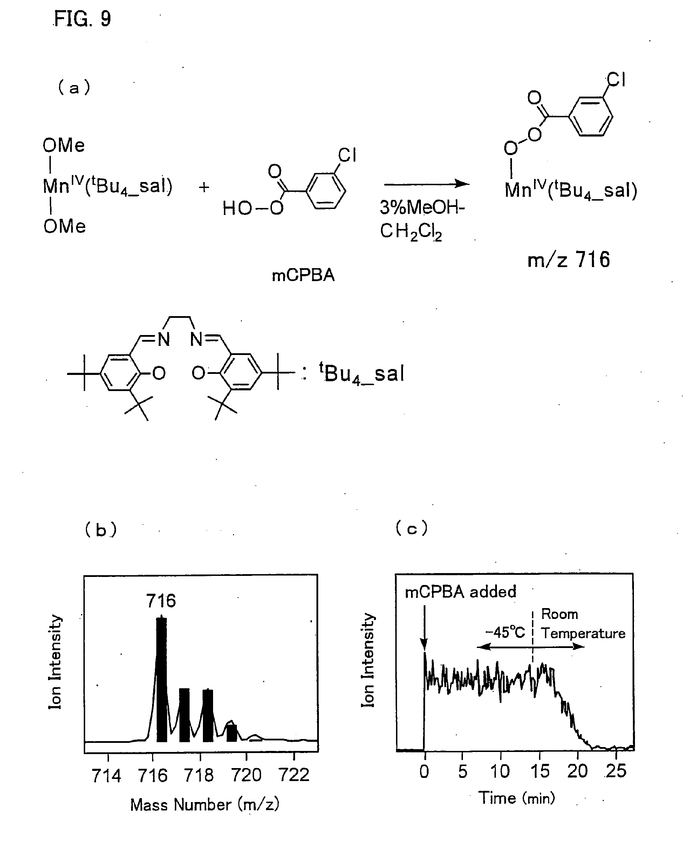

A dichloromethane solution (100 mM) of meta-chloroperbenzoic acid (mCPBA) was added to the 3% methanol-dichloromethane solution of the manganese (IV) methoxy complex in the reaction container 101, using a syringe, in a 5-to-1 mole-equivalent ratio to the manganese (IV) methoxy complex (25 µL). The reaction is shown in Figure 9(a). Figure 9(b) shows the mass spectra obtained in the present example. The graphs indicate that the manganese (IV) methoxy complex was immediately converted to a compound (mass number 716). This compound is the manganese (IV) peroxo complex. Figure 9(c) is a spectrometric diagram in which the ion intensity of the manganese (IV) peroxo complex (mass number 716) is plotted against time. Figure 9(c) shows that the spectrum for the manganese (IV) peroxo complex was lost immediately when the test sample warmed up to room temperature, which indicates that the manganese (IV) peroxo complex decomposed. In other words, the manganese (IV) peroxo complex is undetectable at room temperature.

Detecting a manganese (IV) peroxo complex as in the present example is important in the investigation of oxidation reaction mechanism with a quadrivalent manganese complex as a catalyst (this particular area of study is so far little explored) and will give a highly useful insight for the development of new oxidation reaction catalysts.

From the foregoing, when the test sample itself is a thermally unstable compound, it would be appreciated that the electrospray ionization mass analyzer and method of the present invention is very effective in the detection of its electrospray mass spectrum.

The present invention is by no means limited to the description of the embodiments above, but may be altered within the scope of the claims.

For example, the present invention also encompasses low temperature mass spectrometry and apparatus which feeds a test sample maintained at low temperature into a sprayer using inactive gas pressure and which simultaneously ionizes while directly cooling the sprayer in an inactive gas to analyze the mass of the thermally unstable test sample.

The present invention also encompasses low temperature mass spectrometry and apparatus in which the cooling gas introduction tube for sprayer cooling is a completely separate member from the sprayer to which high voltage is applied.

### INDUSTRIAL APPLICABILITY

The analytical apparatus and method of the present invention is expected to find a lot of applications in the analysis of biopolymers, such as proteins and nucleic acids, and chemical reaction solutions and like test samples that are ever changing with time. The apparatus and method will enable us to analyze and understand, for example, the structure of a reaction intermediate. Apart from the biopolymer field relating to proteins and nucleic acids, the apparatus and method is expected to find a lot of applications in the mass spectrometry of samples like complexes that are stable only at low temperatures like extremely low temperatures.

Therefore, the analytic apparatus and method of the present invention is very useful in the observation of very unstable chemical species like chemical reaction intermediates. Through the analysis of insights gained from such observations, the analytic apparatus and method is expected to find a lot of applications in the development of, for example, new medicines and chemical reaction catalysts.

## Claims

1. An analytical apparatus, comprising:
an absorption/emission/scattering spectrum analyzer analyzing at least one of an absorption spectrum, an emission spectrum, and a scattering spectrum; and
a mass spectrum analyzer analyzing a mass spectrum,
wherein:
the absorption/emission/scattering spectrum analyzer and the mass spectrum analyzer carry out analysis on a single test sample; and
the mass spectrum analyzer includes ion introduction control means controlling a quantity of evaporated test sample ions.

2. The apparatus of claim 1, wherein the ion introduction control means is provided inside an ionization chamber of the mass spectrum analyzer.

3. The apparatus of either one of claims 1 and 2, wherein the ion introduction control means is adjusted in position using a position adjustment knob.

4. The apparatus of any one of claims 1 to 3, wherein the ion introduction control means is made of an electrically non-conductive material.

5. The apparatus of any one of claims 1 to 4, wherein the ion introduction control means has a mesh structure.

6. The apparatus of claim 5, wherein the mesh structure has through holes ranging in diameter from 1 µm to 5 mm.

7. The apparatus of claim 1, wherein the absorption/emission/scattering spectrum analyzer analyzes at least one of an infrared absorption spectrum, a visible to ultraviolet absorption spectrum, a fluorescence spectrum, and a Raman scattering spectrum.

8. The apparatus of any one of claims 1 to 7, wherein the temperature of the test sample is controlled.

9. The apparatus of claim 1, wherein:
the mass spectrum analyzer is an electrospray ionization mass analyzer provided with a sprayer which applies high voltage for ionization and evaporation of a solution of the test sample; and
the mass spectrum analyzer includes: first cooling means cooling the test sample before the test sample is introduced to the absorption/emission/scattering spectrum analyzer and to the mass spectrum analyzer; and second cooling means cooling the sprayer and the test sample introduced to the sprayer.

10. The apparatus of claim 9, wherein the second cooling means is a separate structure from the sprayer.

11. The apparatus of either one of claims 9 and 10, wherein the second cooling means cools at least an area including a high voltage applying section of the sprayer.

12. The apparatus of any one of claims 9 to 11, wherein the second cooling means is a gas introduction tube which ejects a cold inactive gas.

13. The apparatus of claim 12, wherein the cold inactive gas is ejected obliquely, at 30° to 60° to a direction in which a nebulizing gas is ejected, the nebulizing gas assisting the test sample to be ejected under the high voltage application.

14. The apparatus of either one of claims 12 and 13, wherein the cold inactive gas is ejected at a rate less than or equal to the rate at which the nebulizing gas is ejected, the rates being measured per unit area of respective ejection openings, the nebulizing gas assisting the test sample to be ejected under the high voltage application.

15. The apparatus of any one of claims 9 to 14, wherein the first cooling means and the second cooling means are adapted so that the temperatures thereof is adjustable.

16. The apparatus of any one of claims 1 to 15, wherein the test sample is a reaction solution and completes reaction in a few seconds after the reaction starts.

17. An analytical method, comprising:
the absorption/emission/scattering spectrum analysis step of analyzing an absorption/ emission/ scattering spectrum of a test sample; and
the mass spectrum analysis step of controlling a quantity of test sample ions prepared by ionization and evaporation of the test sample, to analyze a mass spectrum,
wherein the absorption/emission/scattering spectrum analysis step and the mass spectrum analysis step are carried out substantially simultaneously and in real time.

18. The method of claim 17, wherein:
the ionization in the mass spectrum analysis step is electrospray ionization in which is used a sprayer which ionizes and evaporates a solution of the test sample under high voltage application for mass spectrometry of the test sample;
said method comprising the first cooling step of cooling the solution before the absorption/emission/scattering spectrum analysis step and the mass spectrum analysis step; and the second cooling step of cooling the sprayer and the solution cooled in the first cooling step and introduced to the sprayer and applying high voltage to the sprayer to ionize and evaporate the solution; and
in the mass analysis step, mass spectrometry is carried out on the test sample cooled in the second cooling step.

19. The method of claim 18, wherein in the second cooling step, the sprayer is cooled before the test sample is introduced to the sprayer.

20. The method of any one of claims 17 to 19, wherein the test sample is stable only at -45°C or lower temperatures.

21. An electrospray ionization mass analyzer, comprising:
a sprayer applying high voltage to a test sample for ionization and evaporation;
first cooling means cooling the test sample before the test sample is introduced to the sprayer; and
second cooling means cooling the sprayer and the test sample introduced to the sprayer.

22. The analyzer of claim 21, wherein the second cooling means is a separate structure from the sprayer.

23. The analyzer of either one of claims 21 and 22, wherein the second cooling means cools at least an area including a high voltage applying section of the sprayer.

24. The analyzer of any one of claims 21 to 23, wherein the second cooling means is a gas introduction tube which ejects a cold inactive gas.

25. The analyzer of claim 24, wherein the cold inactive gas is ejected obliquely, at 30° to 60° to a direction in which a nebulizing gas is ejected, the nebulizing gas assisting the test sample to be ejected under the high voltage application.

26. The analyzer of either one of claim 24 and 25, wherein the cold inactive gas is ejected at a rate less than or equal to the rate at which the nebulizing gas is ejected, the rates being measured per unit area of respective ejection openings, the nebulizing gas assisting the test sample to be ejected under the high voltage application.

27. The analyzer of any one of claims 21 to 26, wherein the first cooling means and the second cooling means are adapted so that the temperatures thereof is adjustable.

28. An electrospray ionization mass analysis method for analyzing the mass of a test sample using a sprayer which applies high voltage for ionization and evaporation of the test sample, comprising:
the first cooling step of cooling the test sample before the test sample is introduced to the sprayer;
the second cooling step of cooling the sprayer and the test sample cooled in the first cooling step and introduced to the sprayer and applying high voltage to the sprayer to ionize and evaporate the test sample; and
the mass spectrum analysis step of analyzing the mass of the test sample cooled in the second cooling step.

29. The method of claim 28, wherein in the second cooling step, the sprayer is cooled before the test sample is introduced to the sprayer.

30. The method of either one of claims 28 and 29, wherein the test sample is stable only at -45°C or lower temperatures.
